# EUROPEAN PATENT SPECIFICATION

(11) **EP 3 924 201 B1**
(45) Date of publication and mention of the grant of the patent: **20.09.2023**
(21) Application number: 20704224.3
(22) Date of filing: 03.02.2020
(51) Int. Cl.: B60K 6/46, B60K 6/383, B60L 50/61

(54) **ARRANGEMENT AND METHOD FOR HYBRID POWER GENERATION**
ANORDNUNG UND VERFAHREN ZUR ERZEUGUNG VON HYBRIDENERGIE
AGENCEMENT ET PROCÉDÉ POUR LA GÉNÉRATION D'ÉNERGIE HYBRIDE

(30) Priority: 12.02.2019 SE 1950167
(43) Date of publication of application: 22.12.2021
(73) Proprietor: Huddig Aktiebolag, 824 12 Hudiksvall (SE)
(72) Inventor: ÅKERSTRÖM, Daniel, 824 52 Hudiksvall (SE)
(74) Representative: AWA Sweden AB
(86) International application number: PCT/EP2020/052609
(87) International publication number: WO 2020/164946

(56) References cited:
- EP-A1- 3 023 290
- WO-A1-2008/123808
- WO-A1-2016/044513

## Description

### FIELD OF THE INVENTION

The present invention is generally related to hybrid power generation. More specifically the present invention is related to hybrid power generation within construction machinery.

### BACKGROUND OF THE INVENTION

The use of hybrid power generation technology within the construction machinery industry continues to attract attention. Within construction machinery applications the operation modes are often periodical, heavy-load and low-speed, which makes the application of solely electric technology as a means of power generation undesirable. Hence, the possibility to exploit hybrid technology within this field is of significant interest.

The use of hybrid power generation technology in construction machinery could allow for improvements in a variety of areas, such as within power generation and regeneration, decreased fuel consumption, greater output, higher torque, quieter machinery and/or more environmentally friendly machinery.

In particular, there is an interest in using hybrid power generation technology in order to produce construction machines with a higher efficiency than current diesel engine construction machines can deliver. Furthermore, the use of hybrid technology within construction machinery can reduce the environmental impact compared to the use of combustion engine technology. A switch to hybrid power generation construction machinery can reduce the pollution, thereby leading to a higher quality of the surrounding air compared to construction machinery only using combustion engine(s). The reduction of pollution is of particular interest when using construction machinery in urban areas. The use of hybrid power generation construction machinery also lowers the noise of the construction machinery, which is of significant importance both for the operator as well as for the surrounding environment.

Hence, it is an object of the present invention to provide a hybrid power technology, for use in construction machinery, which provides at least some of the above-mentioned advantages compared to current non-hybrid technologies.

The patent application WO2016044513 A1 discloses a hybrid power module which delivers both hydraulic power and electric power. The hybrid power module may regenerate and store energy for later use. The module includes and engine and an electric motor for driving a hydraulic pump. The electric motor is operable as a starter motor for the engine and as an assist motor cooperating with the engine to power the hydraulic pump. The module also includes an electric power source which may have an energy storage unit, and the electric motor may be operated as an electric generator providing electric energy to the energy storage unit.

The patent application EP 3 023 290 A1 discloses an electromechanical power transmission chain which comprises an electrical machine connectable to a combustion engine and to a mechanical load, a storage circuit for storing electrical energy, an electronic power converter for transferring electrical energy between the storage circuit and the electrical machine, and a control system for controlling the combustion engine and the electronic power converter. The control system controls the electronic power converter to transfer electrical energy from the storage circuit to the electrical machine in response to a peak-load situation.

### SUMMARY OF THE INVENTION

It is of interest to provide alternatives to non-hybrid technologies of the prior art in order to provide an improved efficiency, environmental friendliness and/or noise reduction of arrangements within the construction machinery industry. This and other objects are achieved by providing a system according to independent claim 1. Preferred embodiments are defined in the dependent claims.

Hence, according to the present invention, there is provided a system comprising an arrangement for hybrid power generation. The arrangement for hybrid power generation comprises a combustion engine, an electrical storage medium, and at least one hydraulic element. The hydraulic element is coupled to the combustion engine and the electrical storage medium. The arrangement for hybrid power generation further comprises at least one converter which is arranged in connection with the combustion engine and the electrical storage medium. The at least one converter is configured for energy conversion between the at least one hydraulic element and the electrical storage medium. The arrangement for hybrid power generation further comprises at least one one-way coupling. The at least one one-way coupling is arranged between the combustion engine and the at least one hydraulic element. During operation of the combustion engine, the arrangement is configured to operate the at least one hydraulic element via the at least one one-way coupling. During operation of the electrical storage medium, the arrangement is configured to operate the at least one hydraulic element via the at least one converter.

Not falling within the scope of the present invention, there is described a method for hybrid power generation in an arrangement. The arrangement comprises a combustion engine, an electrical storage medium. at least one hydraulic element. The hydraulic element is coupled to the combustion engine and the electrical storage medium. The arrangement for hybrid power generation further comprises at least one converter which is arranged in connection with the combustion engine and the electrical storage medium. The at least one converter is configured for energy conversion between the at least one hydraulic element and the electrical storage medium. The arrangement for hybrid power generation further comprises at least one one-way coupling. The at least one on-way coupling is arranged between the combustion engine and the at least one hydraulic element. The method comprises the steps of operating the at least one hydraulic element via the at least one one-way coupling during operation of the combustion engine, and of operating the at least one hydraulic element via the at least one first converter during operation of the electrical storage medium.

It will be appreciated that the arrangement for hybrid power generation may increase the efficiency when compared to current non-hybrid power generation arrangements. The increase in efficiency is related to the inherent power delivery differences between a combustion engine and an electrical power delivery system. For example, it may be desirable to maximize the utilization time of the electric operation of the hybrid system. In order to have an efficient arrangement for power generation it is obvious that maximizing the possible uptime is of utmost importance. Hence, in arrangements for hybrid power generation this translates to the insight of minimizing the downtime caused by switching between the combustion engine and the electrical power delivery system. The arrangement and method according to the present invention is based on this inventive concept.

The one or more one-way coupling(s) of the arrangement allows for the operation of the electrical storage medium even though the combustion engine might still be running. With the at least one one-way coupling the combustion engine can be stopped during operation of the electrical storage medium. The one-way coupling allows for the one or more hydraulic element(s) to be operable during two modes of operation of the arrangement. During a first mode, the combustion engine is operated, and the hydraulic element(s) is (are) operated via the one-way coupling(s). During a second mode, the electrical storage medium is operated, and the hydraulic element(s) is (are) operated via the at least one first converter. Switching between the first and second modes may be done gradually. For example, the combustion engine may be running when switching is performed from one mode to another mode. Thereby, an operation of the electrical storage medium may begin before the combustion engine has been shut down. The hydraulic element(s) may be operated simultaneously via the first converter(s) and the one-way coupling(s).

An operation of the electrical storage medium of the arrangement reduces the environmental impact of the construction machinery. Hence, this operation of the electrical storage medium may allow for the use of clean energy, further increasing the environmental friendliness of the hybrid generation construction machinery. Compared to the operation of the combustion engine (first mode), the operation of the electrical storage medium (second mode) is quieter due to the inherent sound properties of combustion engines. The at least one one-way coupling allows switching from the first mode to the second mode while operating the construction machinery. This means that an operator may switch from the operation of the combustion engine to the electrical storage medium (i.e. a switch from the first mode to the second mode) while operating in a noise sensitive area, thereby reducing the noise of the hybrid generation construction machinery.

The at least one first converter is configured for electrical charging of the electrical storage medium. The electrical charging of the electrical storage medium by the at least one first converter can be done during both modes of operation. The at least one first converter may be an electromechanical element or an electric motor generator element.

According to an embodiment of the present invention, at least one of the at least one first converter is coupled between the combustion engine and the electrical storage medium. The first converter is hereby configured for starting the combustion engine via the electrical storage medium. Hence, the first converter may therefore be used as an electrical starter motor. However, the first converter may also be used for electrical charging of the electrical storage medium. Thereby, the efficiency of the electrical charging may be increased.

According to the invention, the arrangement for hybrid power generation further comprises a transmission. The transmission is coupled between the combustion engine and the at least one first converter. The transmission may couple the shaft of the combustion engine to the first converter(s). The one-way coupling(s) may be arranged between the combustion engine and the transmission, or may alternatively be arranged between the transmission and the first converter(s). The transmission allows for gearing between the combustion engine and the first converter(s), which may increase the efficiency and/or the potential power output of the arrangement.

According to an embodiment of the present invention, the arrangement for hybrid power generation may further comprise an electrical interface coupled to the electrical storage medium, wherein the electrical interface is configured for electrical charging of the electrical storage medium. It should be noted that during operation of the electrical storage medium, the arrangement is much more quiet than during operation of the combustion engine. This is one of the benefits of hybrid power generation technology. Another benefit is that the operation of the arrangement becomes much more environmentally friendly when only the electrical storage medium is operated. One way to maximize the time that the arrangement is operating the electrical storage medium, rather than the combustion engine, is to charge the electrical storage medium. The arrangement of the present invention provides a charging of the electrical storage medium during operation of the combustion engine. Additionally, a charging of the electrical storage medium can also be performed with the use of the electrical interface according to the embodiment of the present invention, wherein the electrical interface may be connected to an electrical power source. The electrical interface can be used to power the arrangement directly, or to charge the electrical storage medium. The electrical interface may be used for charging the electrical storage medium or for using the electrical storage medium to power an auxiliary device. Furthermore, the electrical interface allows the arrangement to operate during operation of the electrical storage medium for longer periods of time. Thereby, the electrical interface of the present embodiment may increase the efficiency, the effectiveness, the environmental friendliness and/or the sound level of the arrangement according to the present invention.

According to an embodiment of the present invention, the combustion engine comprised in the arrangement for hybrid power generation is a diesel engine. It will be appreciated that the combustion engine alternatively could constitute a petrol engine, or an engine using a fuel other than petrol or diesel.

According to an embodiment of the present invention, the at least one hydraulic element in the arrangement for hybrid power generation comprises at least one hydraulic pump. The hydraulic element(s) in form of hydraulic pump(s) may be configured to convert mechanical power into hydraulic power, hydrostatic power, flow or pressure. The one or more hydraulic pump(s) may be comprised in a hydraulic drive system. The use of a hydraulic pump, or a hydraulic system comprising one or more hydraulic pumps, may increase the operational stability, controllability and/or energy efficiency of the arrangement when operating at least one piece of equipment, compared to other power delivery technologies.

According to an embodiment of the present invention, the arrangement for hybrid power generation further comprises at least one piece of equipment. The piece of equipment is coupled to the at least one hydraulic element and is configured to be driven by the at least one hydraulic element. By the term "piece of equipment", it is meant substantially any piece of equipment, tool, or the like, which may be comprised in the arrangement of the present kind. For example, the piece of equipment can be one or more of the following; a shovel, a loader, a scraper, a crane, a forklift, rail wheels, a lift, etc. The piece of equipment may be coupled to the electrical storage medium and be configured to be driven by the electrical storage medium.

According to an embodiment of the present invention, the arrangement for hybrid power generation further comprises a controlling means coupled to the at least one piece of equipment. The controlling means is configured to control the at least one piece of equipment. The controlling means coupled to the at least one piece of equipment could be part of the controlling means configured to control the arrangement for hybrid power generation. The controlling means coupled to the piece of equipment may be remotely operable. This may allow for operation of the piece of equipment in situations which it may be unsuitable or unsafe for the operator to operate in close proximity of the arrangement, thereby increasing the safety of the arrangement.

According to the invention, there is provided a system comprising an arrangement for hybrid power generation and a wheel arrangement. The wheel arrangement comprises at least one wheel. The at least one wheel is coupled to the electrical storage medium of the arrangement for hybrid power generation.

The wheel arrangement further comprises at least one second converter. The at least one second converter is arranged between the at least one wheel and the electrical storage medium. Further, the at least one converter is configured for energy conversion between the at least one wheel and the electrical storage medium. The second converter(s) is (are) configured to operate (i.e. drive) the at least one wheel. The second converter may, for example, comprise or constitute an electromechanical element or an electric motor generator element. The delivery of kinetic energy to the at least one wheel may be specifically configured for each wheel of the at least one wheel, thereby improving the precision of operation when operating the wheel arrangement. Furthermore, the kinetic energy of the wheel(s) can be harvested by the second converter.

The wheel arrangement further comprises at least one transducer unit. The transducer unit is arranged between the electrical storage medium and the at least one second converter. Further, the transducer unit is configured for inversion and/or frequency modulation of electrical signals from the electrical storage medium to the at least one second converter. The at least one transducer unit may, for example, comprise or constitute an inverter unit, a driver unit, a frequency modulation unit, and/or an electro-mechanical unit. The inclusion of the at least one transducer unit in the arrangement of the present invention may increase the efficiency of the energy transfer from the electrical storage medium to the wheel arrangement.

The wheel arrangement further comprises a brake system. The brake system comprises the at least one second converter and the at least one transducer unit. Further, the brake system is configured to convert mechanical braking power of the wheel arrangement into electrical energy, and to feed the electrical energy to the electrical storage medium. The conversion of mechanical braking power into electrical energy may further increase the efficiency of the hybrid power generation arrangement. It should be noted that the increased efficiency of the arrangement as provided by the present embodiment is advantageous with regards to environmental impact, pollution and noise reduction, since the use of the combustion engine can be reduced.

According to an embodiment of the present invention, there is provided a vehicle comprising a chassis, a system according to any one of the previously described embodiments, and a driver cabin. The system and the driver cabin are mounted to the chassis.

Further objectives of, features of, and advantages with, the present invention will become apparent when studying the following detailed disclosure, the drawings and the appended claims.

### BRIEF DESCRIPTION OF THE DRAWINGS

This and other aspects of the present invention will now be described in more detail, with reference to the appended drawings showing embodiment(s) of the invention.
Fig. 1 schematically shows a top view of a system, comprising an arrangement for hybrid power generation, according to an exemplifying embodiment of the present invention, and
Fig. 2 schematically shows a side view of an excavator loader vehicle according to an exemplifying embodiment of the present invention.

### DETAILED DESCRIPTION

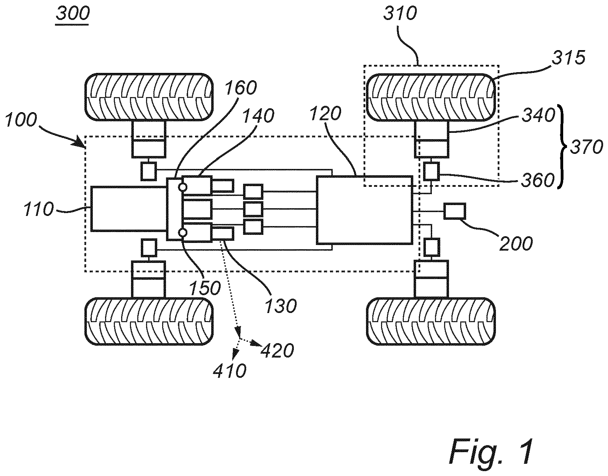

Fig. 1 shows a system 300 comprising an arrangement 100 for hybrid power generation according to the first aspect of the present invention. The system 300 further comprises a wheel arrangement according to an exemplifying embodiment of the present invention, wherein a portion of the wheel arrangement 310 is indicated in Fig. 1.
The arrangement 100 for hybrid power generation comprises a combustion engine 110. The combustion engine 110 is typically a diesel engine. However, the combustion engine 110 could alternatively comprise or constitute a petrol engine, or an engine using a fuel other than petrol or diesel. The arrangement 100 further comprises an electrical storage medium 120. The electrical storage medium 120 is typically a single electric battery, but could alternatively constitute a configuration or assembly of electric batteries. The electric battery(ies) could constitute a battery(ies) of any known battery categories and/or battery types. The arrangement 100 further comprises two hydraulic elements 130 coupled between the combustion engine 110 and the electrical storage medium 120. It should be noted that the configuration of two hydraulic elements 130 of the arrangement 100 is exemplary, and that the arrangement 100 could substantially comprise any number of hydraulic elements 130. The hydraulic elements 130 may comprise one or more hydraulic pumps.

The arrangement 100 further comprises three first converters 140, which are arranged in connection with the combustion engine 110 and the electrical storage medium 120. In Fig. 1, three first converters 140 are configured for energy conversion between the at least one hydraulic element 130 and the electrical storage medium 120. It should be noted that the configuration of three first converters 140 of the arrangement 100 is exemplary, and that the arrangement 100 could substantially comprise any number of first converters 140. Furthermore, all first converters 140 could be configured for energy conversion between the at least one hydraulic element 130 and the electrical storage medium 120. The first converter(s) 140 may constitute an electromechanical element and/or an electromotor generator unit.

In the exemplary embodiment in Fig. 1, the central first converter 140 of the three first converters 140 may be configured for starting the combustion engine 110 via the electrical storage medium 120. Hence, a first converter 140 of the arrangement 100 may therefore be used as an electrical starter motor. However, it is appreciated that there could be any other number of first converters 140 configured for either energy conversion between the at least one hydraulic element 130 and the electrical storage medium 120, or for starting the combustion engine 110 via the electrical storage medium 120.

The arrangement 100 further comprises two one-way couplings 150 arranged between the combustion engine 110 and the two hydraulic elements 130. There may be at least as many one-way couplings 150 as there are hydraulic elements 130. The one-way coupling(s) 150 may constitute a one-way bearing, one-way clutch, freewheel clutch and/or a sprag clutch.

The arrangement 100 in Fig. 1 further comprises a transmission 160 coupled between the combustion engine 110 and the first converters 140. The transmission 160 may constitute a power transmission system and/or a gearbox.

The exemplary embodiment of the arrangement 100 in Fig. 1 further comprises an electrical interface 200 which is coupled to the electrical storage medium 120. The electrical interface 200 is configured for electrical charging of the electrical storage medium 120. It will be appreciated that the position of the electrical interface 200 is not limited to the embodiment as shown in Fig. 1. Moreover, there could be more than one electrical interface 200 configured for electrical charging of the electrical storage medium 120.

The system 300 shown in Fig.1, which comprises the arrangement 100, further comprises a wheel arrangement. The wheel arrangement comprises four wheels 315, and a portion of the wheel arrangement 310 is indicated in Fig. 1 for an increased understanding. The electrical storage medium 120 is coupled directly to each wheel 315. The coupling between the electrical storage medium 120 and the wheels 315 could be provided in series. Since the electrical storage medium 120 could constitute more than one unit, the wheels 315 could be connected to different electrical storage medium 120 units (e.g. one electrical storage medium 120 for every wheel 315). It should be noted that the wheel arrangement 310 is not limited to a specific number of wheels 315.

In the embodiment shown in Fig.1 the wheel arrangement 310 comprises one second converter 340 arranged between every wheel 315 and the electrical storage medium 120. The second converters 340 are configured for energy conversion between the wheels 315 and the electrical storage medium. Additionally, the wheel arrangement 310 further comprises one transducer unit 360 for every wheel 315. The transducer unit 360 is arranged between the electrical storage medium 120 and the second converter 340, and is configured for inversion and/or frequency modulation of electrical signals from the electrical storage medium 120 to the second converters 340. It should be noted that provision of the second converter(s) 340 and/or transducer unit(s) 360 is optional. Likewise, the wheel arrangement 310 may include more or fewer second converters 340 and/or transducer units 360 than there are wheels 315 in the wheel arrangement 310.

The shown wheel arrangement 310 in Fig. 1 comprises a brake system 370. As the wheel arrangement 310 is shown as an exemplary embodiment, the brake system 370 is not essential to the inventive concept of the wheel arrangement 310. The brake system 370 comprises the second converter 340 and the transducer unit 360 and is configured to convert mechanical braking power of the wheel arrangement 310 into electrical energy, and to feed the electrical energy to the electrical storage medium 120. The brake system 370 could be connected to any number of wheels 315 within the wheel arrangement 310. Hence, there could be substantially any number of brake systems 370 connected to any number of wheels 315 within the wheel arrangement 310.

Additionally, the embodiment of the arrangement 100 shown in Fig. 1 comprises connections connectable to one or more piece(s) of equipment 410 and/or controlling means 420 configured to control the piece(s) of equipment 410. The one or more piece(s) of equipment 410 is connectable to the hydraulic element(s) 130 and is configured to be driven by these hydraulic element(s) 130. It should be noted that the connections are not limited to the position as shown in Fig. 1. For example, the arrangement 100 could include a number of connections connectable to one or more piece(s) of equipment 410 and/or controlling means 420 at different positions in the arrangement 100. The one or more piece(s) of equipment 410 may further be coupled to the electrical storage medium 120.

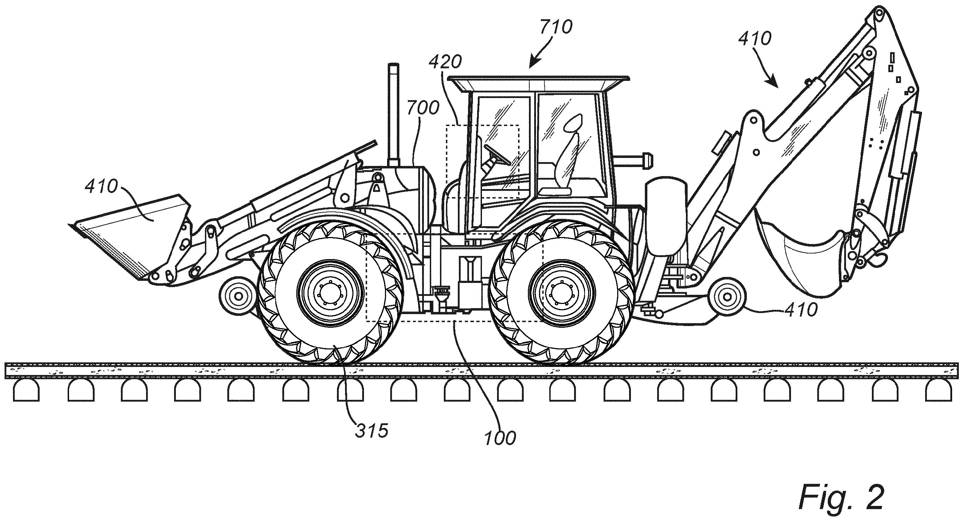

In Fig. 2, a hybrid powered excavator vehicle 400 is schematically shown in a side view. It should be noted that the vehicle 400 can be any kind of vehicle, for example any kind of construction machinery. The vehicle 400 as shown comprises a plurality of exemplifying pieces of equipment 410 (an excavator assembly, a bucket and rail wheels) connected to one or more hydraulic element(s) of the arrangement 100 as schematically indicated. However, the piece(s) of equipment 410 should be understood to include substantially any kind of connectable construction machinery equipment. Furthermore, it is understood that the number of pieces of equipment 410 is not limited to the number shown in Fig. 2. The one or more piece(s) of equipment 410 are mounted to a chassis 700 of the vehicle 400, but may alternatively be connected to the arrangement 100. The chassis 700 is not limited to the shown shape, which is the shape of an excavator vehicle 400. Further, a driver cabin 710 connected to the chassis 700 is also shown. It should be noted that the placements of the pieces of equipment 410, the driver cabin 710, etc., are not limited by the example shown in Fig. 2. For example, a lift, a piece of equipment 410, could be mounted to the chassis at a location separate from the connections displayed in Fig. 2. The controlling means 420 are shown being located inside the driver cabin 710.

According to an alternative embodiment, the vehicle 400 might not comprise any driver cabin 710. The vehicle 400 could then, for example, be controlled by remote controlling means 420. Furthermore, although the vehicle 400 shown comprises four wheels 315, the vehicle 400 could comprise more or fewer wheels 315, or any sort of movement means, such as treads.

The person skilled in the art realizes that the present invention by no means is limited to the preferred embodiments described above. On the contrary, many modifications and variations are possible within the scope of the appended claims. For example, one or more of the combustion engine 110, the electrical storage medium 120, the hydraulic element(s) 130, the first converter(s) 140, the one-way coupling(s) 150, etc., may have different shapes, dimensions and/or sizes than those depicted/described.

## Claims

1. A system (300) comprising,
an arrangement (100) for hybrid power generation, the arrangement (100) comprising
a combustion engine (110),
an electrical storage medium (120),
at least one hydraulic element (130) coupled to the combustion engine (110) and the electrical storage medium (120),
at least one first converter (140), arranged in connection with the combustion engine (110) and the electrical storage medium (120), wherein the at least one first converter (140) is configured for energy conversion between the at least one hydraulic element (130) and the electrical storage medium (120),
a transmission (160) coupled between the combustion engine (110) and the at least one first converter (140) for allowing gearing between the combustion engine (110) and the at least one first converter (140), and
at least one one-way coupling (150) arranged between the combustion engine (110) and the at least one hydraulic element (130),
wherein the arrangement (100), during operation of the combustion engine (110), is configured to operate the at least one hydraulic element (130) via the at least one one-way coupling (150),
and wherein the arrangement (100), during operation of the electrical storage medium (120), is configured to operate the at least one hydraulic element (130) via the at least one first converter (140),
and further comprising
a wheel arrangement (310) comprising
at least one wheel (315), wherein the electrical storage medium (120) is coupled to at least one of the at least one wheel (315), and
at least one second converter (340) arranged between the at least one wheel (315) and the electrical storage medium (120) and configured for energy conversion between the at least one wheel (315) and the electrical storage medium (120), and
at least one transducer unit (360) arranged between the electrical storage medium (120) and the at least one second converter (340) and configured for inversion and/or frequency modulation of electrical signals from the electrical storage medium (120) to the at least one second converter (340), and
a brake system (370) comprising the at least one second converter (340) and the at least one transducer unit (360), wherein the brake system (370) is configured to convert mechanical braking power of the wheel arrangement (310) into electrical energy, and to feed the electrical energy to the electrical storage medium (120).

2. The system (300) according to claim 1, wherein at least one of the at least one first converter (140) is coupled between the combustion engine (110) and the electrical storage medium (120), and is configured for starting the combustion engine via the electrical storage medium (120).

3. The system (300) according to any one of the preceding claims, further comprising an electrical interface (200) coupled to the electrical storage medium (120), wherein the electrical interface (200) is configured for electrical charging of the electrical storage medium (120).

4. The system (300) according to any one of the preceding claims, wherein the combustion engine (110) is a diesel engine.

5. The system (300) according to any one of the preceding claims, wherein the at least one hydraulic element (130) comprises at least one hydraulic pump.

6. The system (300) according to any one of the preceding claims, further comprising at least one piece of equipment (410), coupled to the at least one hydraulic element (130) and configured to be driven by the at least one hydraulic element (130).

7. The system (300) according to claim 6, further comprising a controlling means (420) coupled to the at least one piece of equipment (410) and configured to control the at least one piece of equipment (410).

8. A vehicle (400) comprising,
a chassis (700),
a system according to any one of the preceding claims mounted to the chassis, and
a driver cabin (710) mounted on the chassis.

## Patentansprüche

1. System (300), das Folgendes umfasst:
eine Anordnung (100) zur Hybridleistungserzeugung, wobei die Anordnung (100) Folgendes umfasst:
eine Brennkraftmaschine (110),
ein elektrisches Speichermedium (120),
mindestens ein Hydraulikelement (130), das an die Brennkraftmaschine (110) und das elektrische Speichermedium (120) gekoppelt ist,
mindestens einen ersten Umsetzer (140), der in Verbindung mit der Brennkraftmaschine (110) und dem elektrischen Speichermedium (120) angeordnet ist, wobei der mindestens eine erste Umsetzer (140) zur Energieumsetzung zwischen dem mindestens einen Hydraulikelement (130) und dem elektrischen Speichermedium (120) konfiguriert ist,
ein Getriebe (160), das zwischen die Brennkraftmaschine (110) und den mindestens einen ersten Umsetzer (140) gekoppelt ist, um eine Getriebeübersetzung zwischen der Brennkraftmaschine (110) und dem mindestens einen ersten Umsetzer (140) zu ermöglichen, und
mindestens eine unidirektionale Kupplung (150), die zwischen der Brennkraftmaschine (110) und dem mindestens einen Hydraulikelement (130) angeordnet ist, wobei
die Anordnung (100) konfiguriert ist, während des Betriebs der Brennkraftmaschine (110) das mindestens eine Hydraulikelement (130) mittels der mindestens einen unidirektionalen Kupplung (150) zu betätigen, und
die Anordnung (100) konfiguriert ist, während des Betriebs des elektrischen Speichermediums (120) das mindestens eine Hydraulikelement (130) mittels des mindestens einen ersten Umsetzers (140) zu betätigen, und
ferner Folgendes umfasst:
eine Radanordnung (310), die Folgendes umfasst:
mindestens ein Rad (315), wobei das elektrische Speichermedium (120) an mindestens eines des mindestens einen Rads (315) gekoppelt ist,
mindestens einen zweiten Umsetzer (340), der zwischen dem mindestens einen Rad (315) und dem elektrischen Speichermedium (120) angeordnet ist und zur Energieumsetzung zwischen dem mindestens einen Rad (315) und dem elektrischen Speichermedium (120) konfiguriert ist,
mindestens eine Wandlereinheit (360), die zwischen dem elektrischen Speichermedium (120) und dem mindestens einen zweiten Umsetzer (340) angeordnet ist und zur Inversion und/oder Frequenzmodulation elektrischer Signale vom elektrischen Speichermedium (120) zu dem mindestens einen zweiten Umsetzer (340) konfiguriert ist, und
ein Bremssystem (370), das den mindestens einen zweiten Umsetzer (340) und die mindestens eine Wandlereinheit (360) umfasst, wobei das Bremssystem (370) konfiguriert ist, mechanische Bremsleistung der Radanordnung (310) in elektrische Energie umzusetzen und die elektrische Energie zu dem elektrischen Speichermedium (120) zuzuführen.

2. System (300) nach Anspruch 1, wobei mindestens einer des mindestens einen ersten Umsetzers (140) zwischen die Brennkraftmaschine (110) und das elektrische Speichermedium (120) gekoppelt ist und zum Starten der Brennkraftmaschine mittels des elektrischen Speichermediums (120) konfiguriert ist.

3. System (300) nach einem der vorhergehenden Ansprüche, das ferner eine elektrische Schnittstelle (200) umfasst, die an das elektrische Speichermedium (120) gekoppelt ist, wobei die elektrische Schnittstelle (200) zum elektrischen Laden des elektrischen Speichermediums (120) konfiguriert ist.

4. System (300) nach einem der vorhergehenden Ansprüche, wobei die Brennkraftmaschine (110) eine Dieselkraftmaschine ist.

5. System (300) nach einem der vorhergehenden Ansprüche, wobei das mindestens eine Hydraulikelement (130) mindestens eine Hydraulikpumpe umfasst.

6. System (300) nach einem der vorhergehenden Ansprüche, das ferner mindestens einen Ausrüstungsgegenstand (410) umfasst, der an das mindestens eine Hydraulikelement (130) gekoppelt ist und konfiguriert ist, durch das mindestens eine Hydraulikelement (130) angetrieben zu werden.

7. System (300) nach Anspruch 6, das ferner ein Steuerungsmittel (420) umfasst, das an den mindestens einen Ausrüstungsgegenstand (410) gekoppelt ist und konfiguriert ist, den mindestens einen Ausrüstungsgegenstand (410) zu steuern.

8. Fahrzeug (400), das Folgendes umfasst:
ein Fahrgestell (700),
ein System nach einem der vorhergehenden Ansprüche, das am Fahrgestell montiert ist, und
eine Fahrerkabine (710), die am Fahrgestell montiert ist.

## Revendications

1. Système (300) comprenant,
un agencement (100) de génération d'énergie hybride, l'agencement (100) comprenant
un moteur à combustion (110),
un moyen de stockage électrique (120),
au moins un élément hydraulique (130) accouplé au moteur à combustion (110) et au moyen de stockage électrique (120),
au moins un premier convertisseur (140), agencé en liaison avec le moteur à combustion (110) et le moyen de stockage électrique (120), l'au moins un premier convertisseur (140) étant configuré pour convertir de l'énergie entre l'au moins un élément hydraulique (130) et le moyen de stockage électrique (120),
une transmission (160) accouplée entre le moteur à combustion (110) et l'au moins un premier convertisseur (140) pour permettre la transmission par engrenages entre le moteur à combustion (110) et l'au moins un premier convertisseur (140), et
au moins un accouplement unidirectionnel (150) agencé entre le moteur à combustion (110) et l'au moins un élément hydraulique (130),
l'agencement (100), au cours du fonctionnement du moteur à combustion (110), étant configuré pour faire fonctionner l'au moins un élément hydraulique (130) via l'au moins un accouplement unidirectionnel (150),
et l'agencement (100), au cours du fonctionnement du moyen de stockage électrique (120), étant configuré pour faire fonctionner l'au moins un élément hydraulique (130) via l'au moins un premier convertisseur (140),
et comprenant en outre
un agencement de roues (310) comprenant
au moins une roue (315), le moyen de stockage électrique (120) étant accouplé à au moins une de l'au moins une roue (315), et
au moins un deuxième convertisseur (340) agencé entre l'au moins une roue (315) et le moyen de stockage électrique (120) et configuré pour convertir de l'énergie entre l'au moins une roue (315) et le moyen de stockage électrique (120), et
au moins une unité formant transducteur (360) agencée entre le moyen de stockage électrique (120) et l'au moins un deuxième convertisseur (340) et configurée pour inverser et/ou moduler en fréquence des signaux électriques provenant du moyen de stockage électrique (120) à destination de l'au moins un deuxième convertisseur (340), et
un système de frein (370) comprenant l'au moins un deuxième convertisseur (340) et l'au moins une unité formant transducteur (360), le système de frein (370) étant configuré pour convertir de l'énergie de freinage mécanique de l'agencement de roues (310) en énergie électrique, et pour amener l'énergie électrique au moyen de stockage électrique (120).

2. Système (300) selon la revendication 1, dans lequel au moins un de l'au moins un premier convertisseur (140) est accouplé entre le moteur à combustion (110) et le moyen de stockage électrique (120), et est configuré pour démarrer le moteur à combustion via le moyen de stockage électrique (120).

3. Système (300) selon l'une quelconque des revendications précédentes, comprenant en outre une interface électrique (200) accouplée au moyen de stockage électrique (120), l'interface électrique (200) étant configurée pour effectuer la charge électrique du moyen de stockage électrique (120).

4. Système (300) selon l'une quelconque des revendications précédentes, dans lequel le moteur à combustion (110) est un moteur diesel.

5. Système (300) selon l'une quelconque des revendications précédentes, dans lequel l'au moins un élément hydraulique (130) comprend au moins une pompe hydraulique.

6. Système (300) selon l'une quelconque des revendications précédentes, comprenant en outre au moins une pièce d'équipement (410), accouplée à l'au moins un élément hydraulique (130) et configurée pour être entraînée par l'au moins un élément hydraulique (130).

7. Système (300) selon la revendication 6, comprenant en outre un moyen de commande (420) accouplé à l'au moins une pièce d'équipement (410) et configuré pour commander l'au moins une pièce d'équipement (410).

8. Véhicule (400) comprenant,
un châssis (700),
un système selon l'une quelconque des revendications précédentes monté sur le châssis, et
une cabine de conduite (710) montée sur le châssis.
